## Europäisches Patentamt
## European Patent Office
## Office européen des brevets

(19)

(11) Numéro de publication: **0 070 778**
**B1**

(12) # FASCICULE DE BREVET EUROPEEN

(45) Date de publication du fascicule du brevet:
12.03.86

(51) Int. Cl.⁴: **F 16 K 17/10**

(21) Numéro de dépôt: **82401337.9**

(22) Date de dépôt: **16.07.82**

(54) **Dispositif de pilotage de soupape de sûreté.**

(30) Priorité: **17.07.81 FR 8113970**

(43) Date de publication de la demande:
**26.01.83 Bulletin 83/4**

(45) Mention de la délivrance du brevet:
**12.03.86 Bulletin 86/11**

(84) Etats contractants désignés:
**AT BE CH DE GB IT LI LU NL SE**

(56) Documents cités:
**WO - A - 80/00625**
**FR - A - 1 054 358**
**FR - A - 1 577 361**
**GB - A - 1 264 119**

(73) Titulaire: **BOUTTEVIN & DUBOST S.A., rue du Mouton,
F-18100 Vierzon (FR)**

(72) Inventeur: **Danre, Jean, 22 Avenue de Bonneuil,
F-94210 La Varenne St Hilaire (FR)**

(74) Mandataire: **Polus, Camille et al, c/o Cabinet
Lavoix 2, Place d'Estienne d'Orves, F-75441 Paris
Cedex 09 (FR)**

ACTORUM AG

## Description

Les soupapes de sûreté destinées à limiter la pression d'un fluide à l'intérieur d'une enceinte doivent non seulement permettre l'évacuation automatique d'un certain volume de ce fluide lorsque la pression dépasse une valeur déterminée et se refermer lorsque cette pression est ramenée aux conditions normales de service, mais également assurer une fermeture étanche de l'enceinte dans ces conditions normales, avec des écarts limités entre la pression d'ouverture et la pression de fermeture. Or il est bien connu qu'une telle étanchéité n'est pas réalisée lorsque la pression du fluide dans l'enceinte est voisine de la pression déterminée d'ouverture.

Les soupapes de sécurité sont parfois asservies à un dispositif de pilotage qui capte la pression du fluide dans l'enceinte pour actionner la soupape en fonction de cette pression et a pour but de déterminer des ouvertures et des fermetures instantanées et nettes, avec des écarts réduits entre la pression d'ouverture et la pression de fermeture de la soupape.

Ces dispositifs de pilotage comportent habituellement un piston qui est rendu solidaire du clapet de la soupape et se déplace dans un cylindre qui est mis en communication avec l'enceinte à protéger, et avec un dispositif du purge. Des dispositifs d'obturation commandés par la pression du fluide dans l'enceinte mettent en effet le cylindre en communication avec cette enceinte dans les conditions normales de service, puis avec une canalisation de purge lorsque la pression dépasse la valeur prédéterminée, ce qui provoque l'ouverture du clapet de la soupape et permet l'échappement du fluide sous pression par un orifice de sortie. Inversement, ces dispositifs d'obturation ferment la communication du cylindre avec la canalisation de purge et rouvrent la communication avec l'enceinte lorsque la pression s'abaisse à une valeur inférieure à la pression déterminée.

Différents types de dispositif de pilotage ont déjà été réalisés. Certains sont constitués par une ou plusieurs soupapes de sûreté de petites dimensions, mais les inconvénients inhérents à la soupape de sûreté conventionnelle se retrouvent sur les soupapes du dispositif de pilotage. Le problème est moins grave mais il n'est pas résolu.

D'autres dispositifs de pilotage sont étudiés et mis au point pour une application déterminée et ne peuvent être adaptés à la fois à des enceintes à basse et à haute pression.

Par exemple, le dispositif décrit dans le FR-A-1 577 361 comporte un piston solidaire du clapet principal, qui se déplace dans un cylindre mis en communication avec une enceinte intermédiaire, toujours à la même pression que l'enceinte à protéger, par l'ouverture d'un clapet pilote. Ce clapet est relié à un piston auxiliaire soumis d'une part à la pression dans l'enceinte intermédiaire, et d'autre part à un ressort à tarage réglable, et est ouvert sous l'effet d'une surpression dans l'enceinte.

L'enceinte intermédiaire étant toujours à la même pression que l'enceinte à protéger, l'ouverture du clapet pilote est en fait commandée directement par la surpression dans cette enceinte. En outre, le fluide arrivant dans l'enceinte intermédiaire assure le pilotage en même temps qu'il pénètre dans le cylindre. Une telle soupape est manifestement limitée aux cas où le fluide a une pression et une température très élevées et ne peut assurer une sécurité fiable et nette lorsque la pression, dans l'enceinte à protéger, est relativement faible.

La présente invention a donc pour but de fournir un dispositif de pilotage qui assure une ouverture et une fermeture instantanées et nettes de la soupape, de manière fiable, quelle que soit la pression dans l'enceinte à protéger.

Cette invention a en effet pour objet un dispositif de pilotage d'une soupape de sûreté, comprenant un piston solidaire du clapet de la soupape et mobile dans un cylindre susceptible d'être mis en communication avec l'enceinte à protéger et avec un orifice de purge, un clapet pilote et un organe mobile coopérant avec ce clapet pilote, et soumis à un ressort à tarage réglable, s'opposant à la pression dans l'enceinte à protéger, caractérisé en ce que ledit dispositif comporte un distributeur à tiroir dont le tiroir porte, d'une part à ses extrémités des clapets obturateurs de fermeture alternative de la communication du cylindre avec l'enceinte et avec l'orifice de purge, et d'autre part dans sa partie médiane un piston dont l'une des faces est soumise à la pression régnant dans le cylindre, tandis que son autre face délimite une cavité intermédiaire du distributeur; et un clapet pilote qui comporte un clapet obturateur de fermeture d'un conduit de mise en communication de l'enceinte à protéger et de la cavité intermédiaire du distributeur, qui est maintenu normalement ouvert par le ressort à tarage réglable s'opposant à la pression dans l'enceinte, mais qui est rappelé dans sa position fermée dès qu'il est libéré de l'action du ressort par une surpression dans l'enceinte à protéger, et un clapet de purge isolant la cavité intermédiaire du distributeur de l'orifice de purge, qui est porté avec un léger jeu axial par l'organe mobile soumis au ressort réglable et est ouvert par celui-ci après la fermeture du clapet obturateur.

Des modes particuliers de réalisation de l'invention apparaissent dans les revendications dépendantes.

Ce dispositif de pilotage comporte ainsi deux étages assurant respectivement la fonction de distribution du fluide d'asservissement dans le cylindre et de pilotage, ou commande, du déplacement du distributeur. Par suite les organes de pilotage peuvent être réglés avec toute la précision désirable, sans influencer la fonction du distributeur c'est-à-dire la rapidité des opérations d'ouverture et de fermeture de la soupape de sûreté. En outre les sections de passage du fluide dans le distributeur peuvent être déterminées en fonction du volume déplacé au cours des opérations d'ouverture et de fermeture, sans gêner la précision de fonctionnement du pilotage.

Par ailleurs, comme le volume déplacé dans le distributeur est plusieurs centaines de fois plus réduit que celui déplacé dans le cylindre par le piston, il est possible de n'utiliser dans le pilote que des passages de faible section qui peuvent être réglés avec une grande précision.

Le pilote peut ainsi être adapté aussi bien aux fluides à pression élevée qu'aux fluides à basse pression et permettre d'obtenir un écart aussi réduit que possible entre la pression d'ouverture et la pression de fermeture, quelle que soit l'importance de cette pression.

La descritpion ci-dessous de modes de réalisation donnés à titre d'exemples non limitatifs, et représentés aux dessins annexés, fera d'ailleurs ressortir les avantages et caractéristiques de l'invention.

Sur ces dessins:

— la fig. 1 est une vue schématique en coupe longitudinale d'une soupape de sûreté associée à un dispositif de pilotage selon l'invention;

— la fig. 2 est une vue en coupe suivant la ligne 2–2 de la figure 1;

— les fig. 3 et 4 sont des vues partielles montrant deux variantes de réalisation de l'extrémité du pilote et notamment du dispositif d'étnachéité entre la chambre à la pression de l'enceinte et l'extérieur.

Le soupape de sûreté représentée comporte un corps 1 destiné à être fixé, par exemple au moyen d'une bride 2, sur l'enceinte à protéger. Le corps 1 délimite un premier conduit 4 de communication avec l'enceinte, et un second conduit 5 qui est raccordé à une canalisation d'échappement. La jonction entre les conduits 4 et 5 forme un siège 6 destiné à coopérer avec un clapet 8 de fermeture de la soupape. Le corps 1 porte également un cylindre 9 dans lequel se déplace un piston 10 qui est solidaire du clapet 8; un ressort 11 assure la fermeture du clapet 8 quand la pression de service est nulle.

Le déplacement du piston 10, commandant l'ouverture et la fermeture du clapet 8, est asservi à un dispositif de pilotage qui comporte, à l'intérieur d'un corps 12 fixé sur le corps 1 de la soupape, un distributeur 14 et un pilote 16.

Le distributeur 14 comporte à une extrémité un orifice 18 de communication avec l'intérieur du cylindre 9 et un orifice 20 relié par une canalisation 22 à l'enceinte à protéger. A son extrémité opposée il est percé d'un orifice de purge 24. Le distributeur comporte en outre un alésage axial étagé, s'étendant entre l'orifice 18 et une chambre de purge 26 dans laquelle débouche l'orifice 24. Outre cette chambre de purge 26 l'alésage forme une chambre de grand diamètre 28, dont une extrémité est en communication par un conduit 29 avec l'orifice 18. Un tiroir de distributeur est constitué par un piston étagé qui comporte une partie 30 coulissant dans l'alésage de grand diamètre 28, et une partie 32 de plus petit diamètre qui est guidée dans une portion 33 de diamètre correspondant de l'alésage du distributeur. A chacune des ses extrémités, c'est-à-dire de part et d'autre du piston de grand diamètre 30, le tiroir porte un clapet respectivement 34 et 36. L'un, 34, de ces clapets coopère avec un siège 35 formé à la jonction de la chambre de purge 26 et de l'alésage de grand diamètre 28. Le second clapet, 36, est destiné à coopérer avec un siège 37 formé à l'extrémité de l'orifice 18, dans une chambre 38 communiquant avec l'orifice d'entrée de fluide 20.

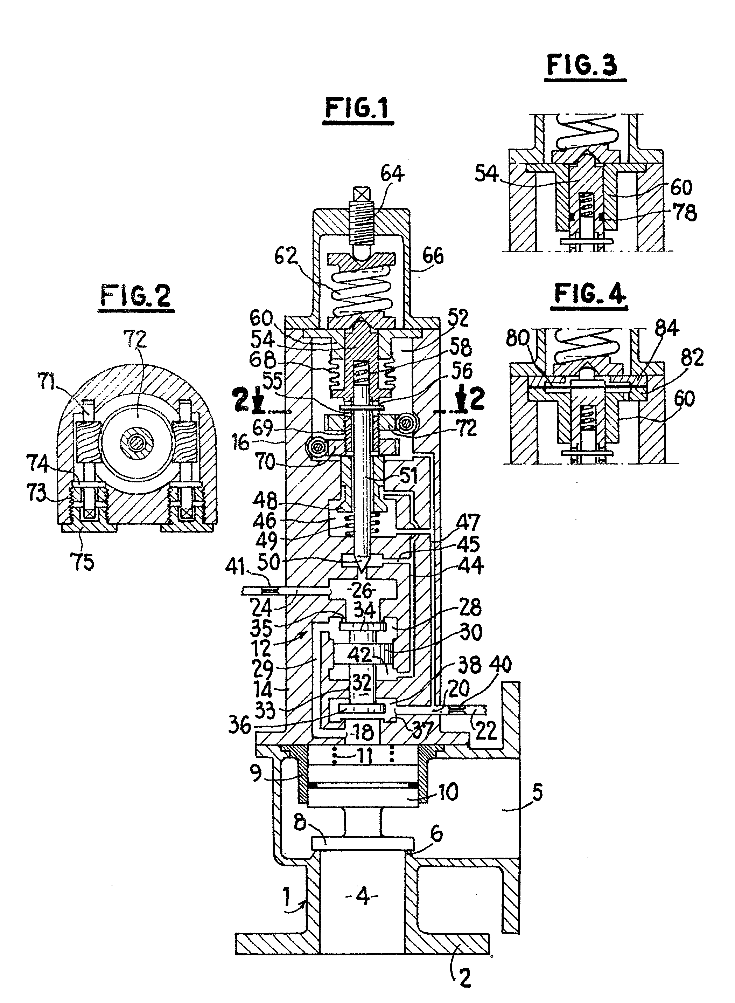

Dans les conditions normales de service, le tiroir du distributeur est dans la position représentée sur la figure 1, dans laquelle le clapet 34 isole l'orifice de purge 24 tandis que le clapet 36 est ouvert et permet au fluide arrivant par la canalisation 20 de pénétrer dans le cylindre 9 et par le conduit 29 jusque dans la partie supérieure de l'alésage 28. Le piston 10 est alors soumis à la pression qui règne dans l'enceinte à protéger et, comme sa surface utile est nettement supérieure à celle du clapet 8, ce dernier est maintenu fermé.

Il est clair qu'un déplacement du tiroir en direction de l'orifice 18 applique le clapet 36 sur le siège 37, tandis qu'il ouvre le clapet 34. Le cylindre 9 est alors isolé de la canalisation d'entrée 20 et mis en communication par le conduit 29 avec l'orifice de purge 24, ce qui permet au fluide contenu dans le distributeur de s'échapper par cet orifice 24 et provoque un soulèvement du piston 10 sous l'action de la pression exercée sous le clapet 8.

Des ajutages 40 et 41, montés respectivement dans la canalisation d'entrée 20 et dans l'orifice de purge 24, permettent de régler le débit du fluide et, par suite, la rapidité des opérations respectivement de fermeture et l'ouverture de la soupape.

Quelle que soit la position du tiroir du distributeur, la face du piston 30 qui est proche du clapet 34 est en communication avec l'orifice 18 et le cylindre 9 par le conduit 29. La face opposée de ce piston 30 délimite avec la seconde partie de l'alésage 28 et le piston 32 une cavité 42, qui est en communication par un conduit 44 avec une chambre 46 du pilote 16. La chambre 46 est également reliée par un conduit 47 avec la canalisation d'entrée 20 du distributeur, c'est-à-dire avec l'enceinte à protéger. A l'intérieur de la chambre 46 un clapet 48 de mise en communication est repoussé par un ressort 49 en direction de l'extrémité du conduit 44, qu'il tend à isoler du conduit 47.

La cavité 42 est également reliée, par l'intermédiaire du conduit 44, d'un second conduit 45 et d'un clapet de purge 50, à la chambre de purge 26 et à l'orifice 24.

La chambre 46 est constamment en communication avec une enceinte 52 dont elle peut être considérée comme une partie, et qui est toujours maintenue à la pression dans l'enceinte à protéger, par le conduit 47, Le clapet de purge 50, qui est du type pointeau, est prolongé par une tige 51 qui traverse axialement le clapet de mise en communication 48 et se prolonge à l'intérieur de l'enceinte 52 dans un piston creux 54. Une broche transversale 56, fixée diamétralement dans la tige 51 et traversant deux trous ovalisés 55 de la paroi du piston 54, relie ces deux organes en leur per-

mettant un déplacement relatif axial limité. Un ressort 58 est toutefois interposé entre la tige 51 et le fond du piston creux 54, et repousse le clapet 50 en direction de son siège.

Le piston 54 est guidé dans un embout cylindrique 60 fixé à l'extrémité du corps 12 du dispositif de pilotage. Il fait ainsi saillie à l'extérieur de ce corps 12 et est soumis à la force d'un ressort 62 dont la résistance peut être réglée au moyen d'une vis 64 vissée dans un chapeau 66 fixé sur le corps 12. Un soufflet 68 monté entre l'embout 60 et un collet du piston 54 assure l'étanchéité de la jonction entre ces deux organes et la fermeture hermétique de l'enceinte 52. A son extrémité opposée à l'embout 60 le piston 54 comporte un filetage 69 sur lequel sont vissées deux roues hélicoïdales, respectivement 70 et 72. La roue hélicoïdale extrême 70, dans les conditions normales de service, vient en contact avec la tige du clapet de mise en communication 48 et exerce sur cette tige une action qui s'oppose à celle du ressort 49 et maintient le clapet ouvert, comme représenté sur la figure 1. De préférence une vis micrométrique 71 est en prise avec la roue 70 (fig. 2) et est prolongée par une tige carrée permettant son actionnement et le réglage de la position de la roue 70 sur le filetage 69.

La vis micrométrique 71 est logée dans un évidement du corps 12 du dispositif de pilotage en étant, par exemple, maintenue par des butées 73 qui coopèrent avec un collet 74, et un bouchon 75 ferme l'évidement pendant l'utilisation du dispositif. La position de la roue hélicoïdale 70 sur le filetage 69 détermine la course du clapet 48 entre sa position d'ouverture et sa position de fermeture, et comprime plus ou moins le ressort 49.

De la même manière la roue hélicoïdale 72 est en prise avec une vis micrométrique qui permet le réglage de sa position axiale le long du filetage 69, c'est-à-dire sa position par rapport au trou 55 et à la broche 56. Par uite la position de cette roue 72 détermine l'importance du jeu axial entre le piston 54 et la tige 51 du clapet du purge.

Dans les conditions normales de service, lorsque le clapet 34 du distributeur est fermé, le clapet 48 de mise en communication est ouvert tandis que le clapet de purge 50 est fermé. Par suite, la cavité 42 du distributeur est soumise à la pression dans l'enceinte, les conduits 44 et 47 étant en communication dans la chambre 46. Lorsque la pression dans l'enceinte à protéger augmente, la pression dans l'enceinte 52 augmente de la même manière et, au moment où cette pression dépasse la pression de réglage du ressort 62, le piston 54 est soulevé contre l'action de ce ressort et entraîne la roue hélicoïdale 70 sur laquelle s'appuie la tige du clapet 48 poussé par le ressort 49; ainsi ce clapet se déplace vers la position de fermeture. La cavité 42 est alors isolée de l'enceinte à protéger.

Pendant ce déplacement, le pinteau 50 a été maintenu contre son siège par le ressort 58 grâce au jeu axial dont il dispose par rapport au piston 54. Toutefois lorsque la roue 72 poursuivant sa course vient en contact avec la broche 56, le clapet de purge 50 s'ouvre et la cavité 42 est mise en communication avec l'orifice de purge 24.

A ce moment la face interne du piston 30 du tiroir du distributeur, c'est-à-dire la face qui délimite la cavité 42, se trouve à la pression atmosphérique, tandis que sa face opposée reste soumise à la pression qui règne dans le cylindre 9 et dans l'enceinte à protéger. Le tiroir du distributeur se déplace donc en direction de l'orifice 18, qui se ferme par le clapet 36, tandis que le clapet 34 met le cylindre 9 en communication avec l'orifice de purge 24. Le fluide s'échappe par cet orifice et le piston 10 se déplace en ouvrant le clapet 8.

Inversement, lorsque la pression dans l'enceinte à protéger, et par suite la pression dans l'enceinte 52, diminuent et atteignent une valeur inférieure à la pression prédéterminée de réglage, le ressort 62 repousse le piston 54 en direction du clapet 48 en entraînant les roues 72 et 70 ainsi que la broche 56 maintenue contre la roue 72 par le ressort 58. Le clapet 50 revient alors en position de fermeture. La roue 70 vient, elle, en butée contre la tige du clapet 48 qu'elle repousse vers sa position d'ouverture en comprimant le ressort 49. Le cavité 42 se trouve alors à nouveau en communication avec l'enceinte à protéger, tandis que la face opposée est encore en communication avec l'atmosphère. Sous l'effet de cette pression différentielle le tiroir du distributeur se déplace à nouveau et reprend la position représentée sur la figure 1, dans laquelle il ferme l'orifice de purge et met le cylindre 9 en communication avec l'orifice d'entrée 20. L'augmentation de pression dans le cylindre 9 provoque alors instantanément le déplacement du piston 10 et la fermeture du clapet 8.

On constate que la pression d'ouverture et la pression de fermeture sont déterminées non seulement par le ressort de réglage 62, mais également par la position des roues hélicoïdales 70 et 72. En conséquence, pour une force donnée de compression du ressort de réglage 62 et pour un écart donné entre la pression d'ouverture et la pression de fermeture de la soupape de sûreté, on peut faire varier avec précision la pression d'ouverture. De même, pour la même force de compression du ressort de réglage 62 et pour une pression d'ouverture donnée, on peut faire varier avec précision l'écart entre cette pression d'ouverture et la pression de fermeture de la soupape de sûreté.

Par ailleurs le volume déplacé dans le distributeur est plusieurs centaines de fois plus réduit que celui qui est déplacé par le piston de la soupape, ce qui facilite la précision du réglage et permet d'utiliser dans le pilote des passages de très faible section permettant un règlage fin et précis, quelle que soit la valeur de la pression du fluide.

Il est clair que les sections de passage dans le distributeur n'ont pas d'influence sur le fonctionnement du dispositif de pilotage et peuvent, par suite, être choisies en fonction du volume et de la pression du fluide à déplacer au cours de la manœuvre. La rapidité de l'ouverture et de la fermeture de la soupape peut ainsi être déterminée en fonction du débit de fluide.

Bien entendu le soufflet d'étanchéité représenté sur la figure 1 pourrait être remplacé par tout autre dispositif approprié. Par exemple, comme le montre la figure 3, le piston 54 peut être muni d'un joint torique 78 glissant avec lui le long de la paroi cylindrique de l'embout 60.

Selon une autre variante, le soufflet 68 est remplacé par une membrane flexible 80, en élastomère ou en métal, qui est pincée à sa périphérie entre un rebord annulaire 82 de l'embout 60 et une bague 84 fixée sur le corps 12 du dispositif de pilotage (fig. 4).

De même, bien que dans le mode de réalisation représenté le corps 12 du dispositif de pilotage soit fixé sur le corps 1 de la soupape, ces deux corps peuvent être placés à une certaine distance l'un de l'autre, l'orifice 18 étant relié au cylindre 9 par une canalisation appropriée.

Dans tous les cas on obtient une ouverture ou une fermeture nette et instantanée de la soupape, le distributeur commandant instantanément et simultanément la fermeture de l'alimentation et l'ouverture de la purge, ou l'inverse.

## Revendications

1. Dispositif de pilotage d'une soupapge de sûreté, comprenant un piston (10), solidaire du clapet (8) de la soupape et mobile dans un cylindre (9) susceptible d'être mis en communication avec l'enceinte à protéger (22) et avec un orifice de purge (24), un clapet pilote (16) et un organe mobile (54) coopérant avec ce clapet pilote, et soumis à un ressort à tirage réglable, s'opposant à la pression dans l'enceinte à protéger, caractérisé en ce que ledit dispositif comporte:

– un distributeur à tiroir (14) dont le tiroir porte, d'une part à ses extrémités des clapets obturateurs (34 et 36) de fermeture alternative de la communication du cylindre (9) avec l'enceinte (22) et avec l'orifice de purge (24), et d'autre part dans sa partie médiane un piston (30) dont l'une des faces est soumise à la pression régnant dans le cylindre (9), tandis que son autre face délimite une cavité intermédiaire (42) du distributeur;

– un clapet pilote (16) qui comporte un clapet obturateur (48) de fermeture d'un conduit de mise en communication de l'enceinte à protéger (22) et de la cavité intermédiaire (42) du distributeur, qui est maintenu normalement ouvert par le ressort à tarage réglable (54 à 72) s'opposant à la pression dans l'enceinte, mais qui est rappelé dans sa position fermée dès qu'il est libéré de l'action du ressort parune surpression dans l'enceinte à protéger,

– un clapet de purge (50) isolant la cavité intermédiaire (42) distributeur de l'orifice de purge (24), qui est porté avec un léger jeu axial par l'organe mobile soumis au ressort réglable et est ouvert par celui-ci après la fermeture du clapet obturateur (48).

2. Dispositif suivant la revendication 1, caractérisé en ce que le clapet obturateur (48) est repoussé par un ressort de rappel (49) contre l'organe mobile (54) qui est soumis à la résistance du ressort à tarage réglable, qui est mobile à l'intérieur d'une enceinte (52) maintenue à la pression de l'enceinte à protéger (22).

3. Dispositif suivant l'une des revendications 1 et 2, caractérisé en ce que l'organe mobile est constitué par un piston creux (54), à l'intérieur duquel la tige (51) du clapet de purge (50) est montée avec un léger jeu axial.

4. Dispositif suivant l'une des revendications 1 à 3, caractérisé en ce que l'organe mobile comporte, à l'opposé du ressort (62), un filetage (69) sur lequel est vissé en position réglable un organe (70) d'appui sur la tige du clapet (48) de mise en communication, contre l'action du ressort de rappel (49).

5. Dispositif suivant l'une des revendications 1 à 4, caractérisé en ce que l'organe mobile (54) du système réglable comporte un filetage (69) sur lequel est vissé, en position réglable, un organe (72) de réglage du jeu axial du clapet de purge (50) par rapport à cet organe mobile.

6. Dispositif suivant l'une des revendications précédentes, caractérisé en ce que le ressort de réglage (62) est placé à l'extérieur de l'enceinte (52), un dispositif d'étanchéité étant monté entre l'organe mobile (54) et la paroi de cette enceinte.

7. Dispositif suivant l'une des revendications précédentes, caractérisé en ce que les conduits qui relient la cavité (42) du distributeur aux clapets de mise en communication (48) et de purge (50) ont une très faible section.

8. Dispositif suivant l'une des revendications 4 et 5, caractérisé en ce que l'organe de réglage vissé sur le filetage de l'organe mobile (54) est constitué par une roue hélicoïdale (70 ou 72) dont la position est réglée au moyen d'une vis micrométrique (71), qui peut être commandée de l'extérieur.

## Patentansprüche

1. Steuervorrichtung für ein Sicherheitsventil, mit einem Kolben (10), der mit dem Verschlussglied (8) des Ventils fest verbunden und in einem Zylinder (9) beweglich ist, der mit einem zu schützenden Behälter (22) und mit einer Ablassöffnung (24) verbunden werden kann, mit einem Steuerventil (16) und mit einem beweglichen Organ (54), das mit dem Steuerventil zusammenarbeitet und von einer einstellbaren Feder beaufschlagt wird, die dem Druck im zu schützenden Behälter entgegenwirkt, dadurch gekennzeichnet, dass diese Vorrichtung folgendes aufweist:

– einen Steuerschieber-Verteiler (14), dessen Steuerschieber trägt: einerseits an seinen Enden Verschlussglieder (34 und 36) zum wahlweisen Schliessen der Verbindung des Zylinders (9) mit dem Behälter (22) und mit der Ablassöffnung (24) und andererseits in seinem Mittelteil einen Kolben (30), dessen eine Stirnfläche dem im Zylinder (9) herrschenden Druck ausgesetzt ist, während dessen andere Stirnfläche eine Zwischenkammer (42) des Verteilers begrenzt;

– ein Steuerventil (16) mit einem Verschlussglied (48) zum Schliessen einer Leitung, die den zu schützenden Behälter (22) und die Zwischenkammer (42) des Verteilers miteinander verbindet, wobei das Verschlussglied normalerweise durch die einstellbare Feder (54 bis 72) offengehalten wird, die dem Druck im Behälter entgegenwirkt, jedoch in seine geschlossene Stellung zurückgestellt wird, sobald es durch die Wirkung der Feder durch einen Überdruck im zu schützenden Behälter freigegeben wird,

– ein Ablassverschlussglied (50), das die Zwischenkammer (42) des Verteilers der Ablassöffnung (24) trennt und das mit geringem axialen Spiel von dem der einstellbaren Feder ausgesetzten beweglichen Organ getragen wird und von diesem nach dem Schliessen des Verschlussglieds (48) geöffnet wird.

2. Vorrichtung nach Anspruch 1, dadurch gekennzeichnet, dass das Verschlussglied (48) von einer Rückstellfeder (49) gegen das bewegliche Organ (54) zurückgedrückt wird, das den Widerstand der einstellbaren Feder ausgesetzt ist, die innerhalb eines Behälters (52) bewegbar ist, der auf dem Druck des zu schützenden Behälters (22) gehalten wird.

3. Vorrichtung nach einem der Ansprüche 1 und 2, dadurch gekennzeichnet, dass das bewegliche Organ durch einen hohlen Kolben (54) gebildet ist, in dem die Stange (51) des Ablassventilglieds (50) mit geringem axialen Spiel gehalten ist.

4. Vorrichtung nach einem der Ansprüche 1 bis 3, dadurch gekennzeichnet, dass das bewegliche Organ entgegengesetzt zur Feder (62) ein Gewinde (69) aufweist, auf das in einstellbarer Stellung ein Organ (70) geschraubt ist zur Anlage an der Stange des Verbindungsglieds (48) gegen die Wirkung der Rückstellfeder (49).

5. Vorrichtung nach einem der Ansprüche 1 bis 4, dadurch gekennzeichnet, dass das bewegliche Organ (54) des einstellbaren Systems ein Gewinde (69) aufweist, auf das in einstellbarer Stellung ein Organ (72) geschraubt ist zur Einstellung des axialen Spiels des Ablassventilglieds (50) gegenüber diesem beweglichen Organ.

6. Vorrichtung nach einem der vorhergehenden Ansprüche, dadurch gekennzeichnet, dass die einstellbare Feder (62) ausserhalb des Behälters (52) angeordnet ist, wobei die Abdichtungsvorrichtung zwischen dem beweglichen Organ (54) und der Wand dieses Behälters eingebaut ist.

7. Vorrichtung nach einem der vorhergehenden Ansprüche, dadurch gekennzeichnet, dass die Leitungen, die die Kammer (42) des Verteilers mit den Verbindungsventilgliedern (48) und dem Ablassventilglied (50) verbindet, einen sehr geringen Querschnitt haben.

8. Vorrichtung nach einem der Ansprüche 4 und 5, dadurch gekennzeichnet, dass das auf das Gewinde des beweglichen Organs (54) geschraubte Einstellorgan durch ein Schrägstirnrad (70 oder 72) gebildet ist, dessen Stellung mittels einer Mikrometerschraube (71) eingestellt wird, die von aussen her betätigt werden kann.

## Claims

1. A device for piloting a safety valve, comprising a piston (10) connected to the closure member (8) of the valve and movable in a cylinder (9) capable of being put in communication with the vessel (22) to be protected and with a purge orifice (24), a pilot valve (16) and a movable element (15) cooperating with this pilot valve and subjected to the action of a spring having an adjustable calibration opposing the pressure in the vessel to be protected, characterised in that said device comprises:

a slide-type directional valve (14) whose slide carries, on one hand, at its ends, valves (34 and 36) for closing alternately the communication between the cylinder (9) and the vessel (22) and the purge orifice (24), and, on the other hand, in its median part, a piston (30) one of the faces of which is subjected to the pressure prevailing in the cylinder (9) while its other face defines an intermediate cavity (42) of the directional valve;

a pilot valve (16) which comprises a closure member (48) for closing a conduit putting the vessel (22) to be protected in communication with the intermediate cavity (42) of the directional valve, which is normally maintained open by the spring (54 to 72) having an adjustable calibration opposing the pressure in the vessel, but which is returned to its closed position as soon as it is freed from the action of the spring by an overpressure in the vessel to be protected;

a purge valve (50) which isolates the intermediate cavity (42) of the directional valve from the purge orifice (24) which is carried with a slight axial clearance by the movable element subjected to the action of the adjustable spring and is opened by the latter after the closure of the closure member (48).

2. A device according to claim 1, characterised in that the closure member (48) is biased by a return spring (49) against the movable element (54) which is subjected to the resistance of the spring having an adjustable calibration, which is movable within a vessel (52) maintained at the pressure of the vessel (22) to be protected.

3. A device according to claim 1 or 2, characterised in that the movable element is constituted by a hollow piston (54) in which the rod (51) of the purge valve (50) is mounted with a slight axial clearance.

4. A device according to one of the claims 1 to 3, characterised in that the movable element comprises, in opposed relation to the spring (62), a screwthread (69) on which is screwthreadedly engaged in an adjustable position an element (70) for bearing against the rod of the communication valve (48) against the action of the return spring (49).

5. A device according to one of the claims 1 to 4, characterised in that the movable element (54) of the adjustable system comprises a screwthread (69) on which is screwthreadedly engaged, in an adjustable position, an element (72) for adjusting the axial clearance of the purge valve (50) relative to this movable element.

6. A device according to one of the preceding claims, characterised in that the adjusting spring (62) is placed outside the vessel (52), a sealing device being mounted between the movable element (54) and the wall of this vessel.

7. A device according to one of the preceding claims, characterised in that the conduits which connect the cavity (42) of the directional valve to the communication valve (48) and the purge valve (50) have a very small section.

8. A device according to one of the claims 4 and 5, characterised in that the adjusting element screwthreadedly engaged on the screwthread of the movable element (54) is constituted by a worm wheel (70 or 72) whose position is adjusted by means of a micrometer screw (71) which may be adjusted from the exterior.

1/1

**FIG.1**

**FIG.3**

**FIG.2**

**FIG.4**

9